# EUROPÄISCHE PATENTANMELDUNG

(11) **EP 4 648 388 A1**
(43) Veröffentlichungstag der Anmeldung: **12.11.2025**
(21) Anmeldenummer: 24174640.3
(22) Anmeldetag: 07.05.2024
(51) Int. Cl.: H04L 67/12, H04L 41/08, H04L 67/00, H04L 12/28

(54) **VERFAHREN ZUM AUFSPIELEN UND/ODER AKTUALISIEREN EINER FIRMWARE MINDESTENS EINES KNOTENS EINES SMART HOME- ODER GEBÄUDE-AUTOMATIONS- SYSTEMS UND SMART HOME- ODER GEBÄUDE-AUTOMATIONS-SYSTEM**

(71) Anmelder: GIRA GIERSIEPEN GmbH & Co. KG, 42477 Radevormwald (DE)
(72) Erfinder: Liseanu, Gabriel, 51381 Leverkusen (DE); Hinrichs, Henning, 26180 Rastede (DE); Loesbrock, Jan, 26125 Oldenburg (DE)
(74) Vertreter: Angerhausen, Christoph

(57) **Zusammenfassung**

Die Erfindung betrifft ein Verfahren zum Aufspielen und/oder Aktualisieren einer Firmware mindestens eines Knotens (30) eines Türkommunikationssystems (10), wobei das Türkommunikationssystem (10) eine Mehrzahl Netzwerkknoten (20) umfasst, die gemäß einer Projektierung konfiguriert sind, wobei das Verfahren umfasst: Auswählen eines Initialknotens (31), wobei ein erster Knoten (32) der Mehrzahl der Netzwerkknoten (20) als Initialknoten (31) ausgewählt wird; Übermitteln der Firmware an den Initialknoten (31), wobei bevorzugt die Firmware von einem externen Gerät (50) übermittelt wird; Übermitteln der Firmware von dem Initialknoten (31) an einen, mehrere oder alle mit dem Initialknoten (31) verbundene weitere Knoten (30); Übermitteln der Firmware an die übrigen Knoten (30) der Mehrzahl Netzwerkknoten (20), wobei die Firmware von dem weiteren Knoten (30) oder den weiteren Knoten (30) an einen, mehrere oder alle mit dem oder den weiteren Knoten verbundene noch weitere Knoten (30) übermittelt wird, so dass der weitere Knoten (30) oder die weiteren Knoten (30) als Replikator dienen. Ein weiterer Aspekt der Erfindung betrifft ein Türkommunikationssystem (10).

## Beschreibung

Die Erfindung betrifft ein Verfahren zum Aufspielen und/oder Aktualisieren einer Firmware mindestens eines Knotens eines Smart Home- oder Gebäude-Automations-Systems, und ein Smart Home- oder Gebäude-Automations-System.

Türkommunikationssysteme dienen beispielsweise dazu, ein Klingeln an einer Tür zu kommunizieren, um z.B. das Warten einer Person vor einer Tür zu signalisieren. Üblicherweise kann über ein Türkommunikationssystem ein Öffnen einer Tür initiiert werden, und/oder eine Tür geöffnet werden, z.B. durch Öffnen eines Türschlosses. Türkommunikationssysteme können auch eine Erkennung und/oder Identifikation von vor der Tür befindliche Personen oder Gegenstände ermöglichen, und/oder eine Kommunikation mit vor der Tür befindlichen Personen ermöglichen.

Türkommunikationssysteme sind beispielsweise in fast jedem Gebäude, Wohnung Wohneinheit oder Gewerbeeinheit verbaut.

Häufig besteht der Wunsch, dass ein Türkommunikationssystem eine Vielzahl von Innenstationen und/oder entsprechenden Außenstationen aufweisen soll, wodurch das Türkommunikationssystem eine hohe Anzahl an Knoten bzw. Kommunikationsteilnehmer aufweisen kann.

Ein bekanntes Verfahren zum Aufspielen und/oder Aktualisieren einer Firmware eines intelligenten Türschlosssystem ist in der US 2016/0291966 A1 beschrieben. Das Türschlosssystem umfasst eine Positionserfassungsvorrichtung, die mit einer Antriebswelle einer Schlossvorrichtung gekoppelt ist, um das Verriegeln und Entriegeln eines Schlosses einer Schlossvorrichtung zu unterstützen, einen Motor, der mit der Positionserfassungsvorrichtung gekoppelt ist, eine mit dem Motor gekoppelte elektronische Schaltung und eine Energiequelle. Die Firmware wird von einem Server bereitgestellt und an das Türschlosssystem übermittelt. Sind mehrere Türschlösser (bzw. Türschlosssysteme) vorgesehen, so wird die Firmware von dem Server an jedes der Türschlösser übermittelt. Damit muss die Firmware an jede Komponente separat übertragen werden.

Es ist deshalb Aufgabe der vorliegenden Erfindung, ein Verfahren zum Aufspielen und/oder Aktualisieren einer Firmware mindestens eines Knotens eines Smart Home- oder Gebäude-Automations-Systems nach Anspruch 1 und ein Smart Home- oder Gebäude-Automations-System nach Anspruch 12 bereitzustellen, das diese Nachteile überwindet. Die jeweiligen Unteransprüche betreffen vorteilhafte Ausführungsformen.

Bei dem erfindungsgemäßen Verfahren können Knoten des Smart Home- oder Gebäude-Automations-Systems als Replikatoren bei der Übertragung der Firmware dienen. Die Firmware kann an einen Initialknoten übertragen sein oder werden, und ausgehend von dem Initialknoten kann die Firmware im Smart Home- oder Gebäude-Automations-System und/oder an die übrigen Knoten verteilt sein oder werden. Dabei kann ein Knoten, der die Firmware empfangen hat, diese an weitere mit dem Knoten verbundene Knoten übertragen.

Ein erster Aspekt der Erfindung betrifft ein Verfahren zum Aufspielen und/oder Aktualisieren einer Firmware mindestens eines Knotens eines Smart Home- oder Gebäude-Automations-Systems, beispielsweise eines Türkommunikationssystems, wobei das Smart Home- oder Gebäude-Automations-System eine Mehrzahl Netzwerkknoten umfasst, die gemäß einer Projektierung konfiguriert sind, wobei das Verfahren umfasst:
a) Auswählen eines Initialknotens, wobei ein erster Knoten der Mehrzahl der Netzwerkknoten als Initialknoten ausgewählt wird;
b) Übermitteln der Firmware an den Initialknoten;
c) Übermitteln der Firmware von dem Initialknoten an einen, mehrere oder alle mit dem Initialknoten verbundene weitere Knoten;
d) Übermitteln der Firmware an die übrigen Knoten der Mehrzahl Netzwerkknoten, wobei die Firmware von dem weiteren Knoten oder den weiteren Knoten an einen, mehrere oder alle mit dem oder den weiteren Knoten verbundene noch weitere Knoten übermittelt wird, so dass der weitere Knoten oder die weiteren Knoten als Replikator dienen.

Dadurch kann eine dezentrale Verteilung der Firmware im Smart Home- oder Gebäude-Automations-System und/oder an die Knoten erreicht sein oder werden. Damit kann die Übertragungsgeschwindigkeit der Firmware im Smart Home- oder Gebäude-Automations-System erhöht sein oder werden. Zudem kann eine Fehleranfälligkeit der Übertragung reduziert sein oder werden.

Die Firmware kann ein Update einer bereits vorhandenen und/oder bereits aufgespielten Firmware sein und/oder umfassen.

Das Verfahren, und/oder mindestens einer, mehrere oder alle Schritte des Verfahrens, können computergestützt sein. In einigen Ausführungsformen können mindestens zwei Schritte des Verfahrens vertauscht und/oder in anderer Reihenfolge durchgeführt sein oder werden.

Das Smart Home- oder Gebäude-Automations-System kann auf IP Basis, und/oder SIP (session initiation protocol) Basis, beruhen und/oder einer solchen entsprechen. Das Smart Home- oder Gebäude-Automations-System kann dezentral sein. In einigen Ausführungsformen kann das Smart Home- oder Gebäude-Automations-System einem SIP-System entsprechen, wobei kein zentraler Server (z.B. für Registrierung und Verwaltung der Knoten) notwendig ist.

Ein Türkommunikationssystem kann Teil eines Smart Home- oder eines Gebäudeautomationssystems sein. Es kann vorgesehen sein, dass ein Smart Home-, oder ein Gebäudeautomationssystem, ein Türkommunikationssystem umfassen kann.

Es kann vorgesehen sein, dass jeder beliebige Knoten der Mehrzahl Netzwerkknoten als Initialknoten ausgewählt sein oder werden kann, und/oder als Initialknoten funktionieren, verwendet und/oder dienen kann.

Die Mehrzahl Netzwerkknoten kann Knoten, den ersten Knoten, einen zweiten Knoten, den Initialknoten, einen Inbetriebnahmeknoten, Außenstellenknoten, Innenstellenknoten und/oder Netzwerkverbindungsknoten umfassen.

Die Firmware kann dabei zunächst nur an den Initialknoten übermittelt werden. Anschließend kann die Firmware an die restlichen Knoten im System z.B. ausgehend von dem gewählten Initialknoten, übertragen sein oder werden.

Die Firmware kann von einem externen Gerät übermittelt sein oder werden. Es kann vorgesehen sein, ein externes Gerät zum Aufspielen und/oder der Aktualisierung der Firmware eines Smart Home- oder Gebäude-Automations-Systems nach einem erfindungsgemäßen Verfahren zu verwenden. Das externe Gerät kann ein Mobilgerät, z.B. ein Laptop, ein Smartphone, ein Tablet, und/oder ein PDA sein oder aufweisen. Alternativ oder zusätzlich kann das externe Gerät ein Server sein oder aufweisen. Das externe Gerät kann ein Computergerät und/oder eine Computereinheit sein oder aufweisen. Das externe Gerät kann zur Durchführung des erfindungsgemäßen Verfahrens verwendet sein und/oder werden.

Die Projektierung kann Konfigurationsparameter der Knoten umfassen. Die Projektierung und/oder Konfigurationsparameter können Einstellungen und/oder Parameter der jeweiligen Knoten umfassen. Die Projektierung kann beispielsweise umfassen, welche der Knoten miteinander kommunizieren und/oder Daten austauschen können. Es kann vorgesehen sein, dass die Firmware über, mit und/oder entlang mindestens einer Verbindung zweier jeweiliger Knoten zwischen zwei Knoten übertragen sein oder werden kann. Die Verbindung kann durch die Projektierung vorgegeben sein. In einigen Ausführungsformen kann ein Knoten die Firmware an einen unmittelbar mit diesem verbundenen anderen Knoten übertragen. Es kann vorgesehen sein, dass ein Knoten von einem anderen Knoten empfangene Firmware, Daten, Nachrichten, Datentelegramme oder dergleichen an einen weiteren Knoten weiterleiten kann.

Ein Knoten kann ein Kommunikationsteilnehmer sein oder aufweisen, und/oder als Kommunikationsteilnehmer bezeichnet sein oder werden. Ein Knoten kann beispielsweise eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen sein oder aufweisen. Eine Klingel, eine Sprechanlage, ein Lautsprecher, ein Mobilgerät, ein Bildschirm, eine Innenstation, eine Außenstation, eine sonstige Komponente eines Türkommunikationssystems oder dergleichen kann beispielsweise einen Knoten aufweisen. Ein Knoten, eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann in einer Wohneinheit, in einer Gewerbeeinheit, in einem Innenraum, in einem geschlossenen Raum, in einem Gebäude, an oder bei einer Innenseite einer Tür, oder dergleichen angeordnet sein. Ein Knoten, eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann in einem Außenbereich, im freien, draußen, vor einer Wohneinheit, vor einem Innenraum, vor einem Gebäude, an oder bei einer Außenseite einer Tür, oder dergleichen angeordnet sein.

Beispielsweise kann durch die Kommunikation und/oder den Datenaustausch zwischen jeweiligen Knoten Daten, Mediendaten, z.B. Video und/oder Audio, Datentelegramme, ein Signal, die Firmware oder dergleichen übermittelt sein oder werden. Es kann vorgesehen sein, dass die Knoten auf IP Basis, und/oder SIP Basis, miteinander kommunizieren und/oder Daten austauschen können.

Es kann vorgesehen sein, dass mindestens zwei, mehrere oder alle Knoten drahtlos miteinander kommunizieren und/oder Daten austauschen können, z.B. über WLAN. Alternativ oder zusätzlich kann vorgesehen sein, dass mindestens zwei, mehrere oder alle Knoten kabelgebunden miteinander kommunizieren und/oder Daten austauschen können, beispielsweise über ein BUS-System, z.B. KNX.

Die Kommunikation und/oder der Datenaustausch zwischen zwei Knoten kann bidirektional sein und/oder erfolgen.

Die Mehrzahl Netzwerkknoten kann mindestens einen, mehrere oder alle Knoten des Smart Home- oder Gebäude-Automations-Systems umfassen. Ein Knoten kann ein Netzwerkknoten sein oder aufweisen. Ein Knoten kann ein Initialknoten, Inbetriebnahmeknoten, ein Innenstellenknoten, ein Außenstellenknoten oder ein Netzwerkverbindungsknoten sein oder aufweisen.

Ein oder der Initialknoten kann ein Außenstellenknoten sein oder aufweisen. In einigen Ausführungsformen kann ein beliebiger Außenstellenknoten als Initialknoten ausgewählt sein oder werden.

Ein oder der Initialknoten kann ein Innenstellenknoten sein oder aufweisen. In einigen Ausführungsformen kann ein beliebiger Innenstellenknoten als Initialknoten ausgewählt sein oder werden.

Es kann vorgesehen sein, dass die Firmware auf einen Knoten aufgespielt und/oder die Firmware des Knotens aktualisiert werden kann, bevor der Knoten die Firmware weiter überträgt. Alternativ oder zusätzlich kann vorgesehen sein, dass die Firmware auf einen Knoten aufgespielt und/oder die Firmware des Knotens anhand der von diesem Knoten empfangenen Firmware aktualisiert werden kann, nachdem der Knoten die empfangene Firmware an einen oder mehrere andere Knoten überträgt und/oder übertragen hat.

Der Schritt d) kann wiederholt werden, so dass die Firmware an alle Knoten der Mehrzahl Netzwerkknoten sukzessive übermittelt werden kann. Die Knoten können damit als Replikator dienen. Insbesondere können diejenigen Knoten, die die Firmware bereits empfangen haben, als Replikator dienen. Damit können Knoten, die die Firmware bereits empfangen haben, die Firmware im Smart Home- oder Gebäude-Automations-System und/oder Netzwerk verteilen. Bei einer oder mehreren Wiederholungen kann der oder die noch weitere Knoten vor der Wiederholung dem oder den weiteren Knoten bei der Wiederholung entsprechen. Beispielsweise kann die Firmware zunächst von dem Initialknoten an einen Knoten A übertragen sein oder werden, und der Knoten A die Firmware an einen Knoten B übertragen. Dabei kann der Knoten A ein weiterer Knoten, und der Knoten B ein noch weiterer Knoten sein oder aufweisen. Bei einer Wiederholung kann die Firmware von dem Knoten B an einen Knoten C übertragen sein oder werden. Der Knoten B kann bei der Wiederholung ein weiterer Knoten sein, aufweisen und/oder entsprechen, und der Knoten C einem noch weiteren Knoten. In einigen Ausführungsformen kann eine weitere Wiederholung vorgesehen sein, wobei die Firmware von dem Knoten C an einen Knoten D übertragen sein oder werden kann. Der Knoten C kann bei der Wiederholung ein weiterer Knoten sein, aufweisen und/oder entsprechen, und der Knoten D einem noch weiteren Knoten. Weitere Wiederholungen können entsprechend vorgesehen sein. In einigen Ausführungsformen können so viele Wiederholungen vorgesehen sein, dass die Firmware an jeden Knoten übertragen sein oder werden kann. Es kann vorgesehen sein, dass bei mindestens einer Wiederholung nicht jeder der Knoten, die die Firmware vorher empfangen haben, die Firmware an einen noch weiteren Knoten übertragen müssen. Beispielsweise kann bei einer ersten Wiederholung die Firmware von dem Knoten B an einen Knoten C und einen Knoten E übertragen sein oder werden, und bei der weiteren Wiederholung die Firmware nicht von dem Knoten E übertragen sein oder werden kann.

Beim Übermitteln der Firmware können mindestens zwei oder mehr weitere Knoten die Firmware an mindestens einen der noch weiteren Knoten übermitteln, so dass die Firmware an den noch weiteren Knoten parallel übermittelt werden kann.

Ein erster Teil der Firmware kann von einem der weiteren Knoten, und ein zweiter Teil der Firmware von einem anderen der weiteren Knoten an den noch weiteren Knoten übermittelt werden. Es kann vorgesehen sein, dass der erste Teil der Firmware und der zweite Teil der Firmware voneinander verschieden sein können. Damit kann beispielsweise die Ausbreitungsgeschwindigkeit und/oder ein Roll-out der Firmware beschleunigt sein oder werden. Alternativ oder zusätzlich können der erste Teil und der zweite Teil zumindest teilweise gleich und/oder identisch sein. Damit kann z.B. die Vollständigkeit der Übertragung der Firmware geprüft sein oder werden, und/oder fehlende Teile identifiziert und/oder ergänzt sein oder werden.

Wird die Firmware zumindest teilweise nicht vollständig von einem Knoten an einen anderen Knoten übertragen, so kann vorgesehen sein, dass die Firmware nochmals von dem einen an den anderen Knoten übertragen werden kann. Alternativ oder zusätzlich kann vorgesehen sein, dass die Firmware von einem anderen, mit dem die Firmware zu empfangenden Knoten verbundenen Knoten, an den entsprechenden Knoten übermittelt ist oder wird.

Das Smart Home- oder Gebäude-Automations-System kann ein erstes Netzwerk und ein zweites Netzwerk umfassen, die über mindestens einen Netzwerkverbindungsknoten miteinander verbunden sein können. Beim Übermitteln der Firmware an die übrigen Knoten kann die Firmware von dem ersten Netzwerk an das zweite Netzwerk über den Nerzwerkverbindungsknoten, und/oder von dem zweiten Netzwerk an das erste Netzwerk über den Nerzwerkverbindungsknoten, übermittelt wird.

Das erste Netzwerk kann ein Außenstellennetzwerk und das zweite Netzwerk ein Innenstellennetzwerk sein und/oder aufweisen. Alternativ oder zusätzlich kann das erste Netzwerk ein Innenstellennetzwerk und das zweite Netzwerk ein Außenstellennetzwerk sein und/oder aufweisen. Bei dem Auswählen des Initialknotens kann ein Knoten des ersten Netzwerks als Initialknoten ausgewählt werden.

In einigen Ausführungsformen kann ein Außenstellenknoten "draußen", in einem Außenbereich, im freien, vor einem Gebäude, vor einer Tür oder dergleichen angeordnet sein. In einigen Ausführungsformen kann ein Innenstellenknoten "drinnen", in einem Innenbereich, in einem geschlossenen Raum, in einem Gebäude, in einer Wohnung, in einer Gewerbeeinheit, hinter einer Tür oder dergleichen angeordnet sein.

Bei dem Verfahren kann ein Knoten ein Außenstellenknoten sein und/oder aufweisen. Bei dem Auswählen des Initialknotens kann ein oder der Außenstellenknoten des ersten Netzwerks als Initialknoten ausgewählt werden.

Es kann vorgesehen sein, dass ein Außenstellennetzwerk mindestens einen Außenstellenknoten aufweisen kann. Es kann vorgesehen sein, dass ein Außenstellennetzwerk nur Außenstellenknoten aufweisen kann, und/oder nur Außenstellenknoten und Netzwerkverbindungsknoten aufweisen kann. Es kann vorgesehen sein, dass ein Innenstellennetzwerk mindestens einen Innenstellenknoten aufweisen kann. Es kann vorgesehen sein, dass ein Innenstellennetzwerk nur Innenstellenknoten aufweisen kann, und/oder nur Innenstellenknoten und Netzwerkverbindungsknoten aufweisen kann.

Das Verfahren kann wiederholt werden, wobei beim Auswählen des Initialknotens ein zweiter Knoten als Initialknoten ausgewählt werden kann. Es kann vorgesehen sein, dass der zweite Knoten und der erste Knoten verschieden sein können. In einigen Ausführungsformen kann als zweiter Knoten jeder beliebige Knoten des Smart Home- oder Gebäude-Automations-Systems ausgewählt sein oder werden. Alternativ oder zusätzlich kann vorgesehen sein, dass der zweite Knoten ein Außenstellenknoten sein oder aufweisen kann.

In einigen Ausführungsformen kann vorgesehen sein, dass mindestens zwei oder mehr Knoten als Initialknoten ausgewählt sein oder werden können. Die Firmware kann an jeden der Initialknoten übertragen sein und/oder werden, z.B. von einem oder dem externen Gerät, und anschließend ausgehend von mindestens einem, mehreren oder jedem der Initialknoten im Smart Home- oder Gebäude-Automations-System und/oder Netzwerk an die übrigen Knoten verteilt und/oder übertragen sein oder werden. Dabei können Knoten, die die Firmware bereits empfangen haben, als Replikator dienen.

Es kann vorgesehen sein, dass einer, mehrere oder alle Knoten eines Innenstellennetzwerks die Firmware von einem mit dem Innenstellennetzwerk verbundenen Netzwerkverbindungsknoten empfangen kann.

Der oder die Knoten können entsprechend der Projektierung konfiguriert sein. Es kann vorgesehen sein, dass die Knoten des Smart Home- oder Gebäude-Automations-Systems vor und/oder bei dem Aufspielen und/oder Aktualisieren der Firmware konfiguriert sein können.

Vor dem Auswählen des Initialknotens kann das Smart Home- oder Gebäude-Automations-System entsprechend der Projektierung konfiguriert werden, wobei das Konfigurieren umfassen kann:
- Bereitstellen der Projektierung des Smart Home- oder Gebäude-Automations-Systems;
- Auswählen eines Inbetriebnahmeknotens, wobei ein Knoten der Mehrzahl Netzwerkknoten als Inbetriebnahmeknoten ausgewählt wird;
- Übermitteln der Projektierung an den Inbetriebnahmeknoten, wobei bevorzugt die Projektierung von dem externen Gerät übermittelt wird;
- Übermitteln der Projektierung und/oder Konfigurationsparameter der Projektierung ausgehend von dem Inbetriebnahmeknoten an die übrigen Knoten der Mehrzahl Netzwerkknoten, und Konfigurieren der Knoten mit einer der Projektierung entsprechenden Konfiguration.

Die Projektierung kann von einem oder dem externen Gerät übermittelt sein oder werden.

Es kann vorgesehen sein, dass beim Konfigurieren der Knoten mit einer der Projektierung entsprechenden Konfiguration jeder Knoten der Mehrzahl Netzwerkknoten konfiguriert sein oder werden kann, oder nur die übrigen Knoten der Mehrzahl Netzwerkknoten konfiguriert sein oder werden können. Es kann vorgesehen sein, dass beim Konfigurieren der Knoten mit einer der Projektierung entsprechenden Konfiguration der Inbetriebnahmeknoten konfiguriert sein oder werden kann.

Es kann vorgesehen sein, dass der Inbetriebnahmeknoten nach dem Übermitteln der Projektierung an den Inbetriebnahmeknoten konfiguriert sein oder werden kann. In einigen Ausführungsformen kann der Inbetriebnahmeknoten vor dem Übermitteln der Projektierung und/oder der Konfigurationsparameter an die übrigen Knoten konfiguriert sein oder werden kann.

Ein Konfigurieren eines Knotens kann umfassen, den Knoten zur Kommunikation und/oder Datenaustausch mit einem oder mehreren anderen Knoten einzurichten. Ein Konfigurieren eines Knotens kann umfassen, Parameter und/oder Einstellungen eines Knotens zu definieren und/oder vorzugeben.

Beim Übertragen der Projektierung und/oder der Konfigurationsparameter kann die Projektierung und/oder Konfiguration zwischen mindestens zwei, mehreren oder allen jeweils unmittelbar miteinander verbundenen Knoten übertragen werden, und/oder sukzessive mindestens zwei, mehrere oder jeder der Mehrzahl Knoten konfiguriert werden. Alternativ oder zusätzlich kann beim Übertragen der Projektierung und/oder der Konfigurationsparameter der Inbetriebnahmeknoten die Projektierung und/oder die Konfigurationsparameter unmittelbar an mindestens einen, mehrere oder jeden der übrigen Knoten der Mehrzahl Netzwerkknoten übertragen.

Mindestens ein in der Projektierung vorgesehener Knoten kann nach dem Aufspielen und/oder nach der Aktualisierung der Firmware dem Smart Home- oder Gebäude-Automations-System hinzugefügt werden. Die Firmware kann an den neu hinzugefügten Knoten übertragen werden. In einigen Ausführungsformen kann die Firmware kann von dem Initialknoten und/oder einem mit dem hinzugefügten Knoten unmittelbar verbundenen Knoten an den neu hinzugefügten Knoten übertragen werden.

Ein weiterer Aspekt der Erfindung betrifft ein Smart Home- oder Gebäude-Automations-System, beispielsweise ein Türkommunikationssystem, umfassend eine Mehrzahl Netzwerkknoten, deren Firmware nach einem der vorangegangenen Ansprüche aktualisiert ist und/oder auf die Firmware nach einem der vorangegangenen Ansprüche aufgespielt ist.

Die Knoten der Mehrzahl Netzwerkknoten können dazu eingerichtet sein, miteinander zu kommunizieren und/oder Daten auszutauschen. Die Knoten der Mehrzahl Netzwerkknoten können dazu eingerichtet sein, verschlüsselt miteinander zu kommunizieren und/oder verschlüsselt Daten auszutauschen.

Das Smart Home- oder Gebäude-Automations-System kann ein erstes Netzwerk, ein zweites Netzwerk und mindestens einen Netzwerkverbindungsknoten aufweisen. Das erste Netzwerk kann mit dem zweiten Netzwerk über den mindestens einen Netzwerkverbindungsknoten verbunden sein.

Das erste Netzwerk kann mindestens einen Außenstellenknoten aufweisen, und/oder das zweite Netzwerk mindestens einen Innenstellenknoten aufweisen. Es kann vorgesehen sein, dass das erste Netzwerk ein Außenstellennetzwerk und/oder das zweite Netzwerk ein Innenstellennetzwerk sein und/oder aufweisen kann. Alternativ oder zusätzlich kann das erste Netzwerk ein Innstellennetzwerk und/oder das zweite Netzwerk ein Außenstellennetzwerk sein und/oder aufweisen.

Die Erfindung wird anhand der nachfolgenden Figuren weiter erläutert. Es zeigen:
- Fig. 1:: eine erste Ausführungsform eines erfindungsgemäßen Verfahrens und Türkommunikationssystems; und
- Fig. 2:: eine weitere Ausführungsform eines erfindungsgemäßen Verfahrens und Türkommunikationssystems.

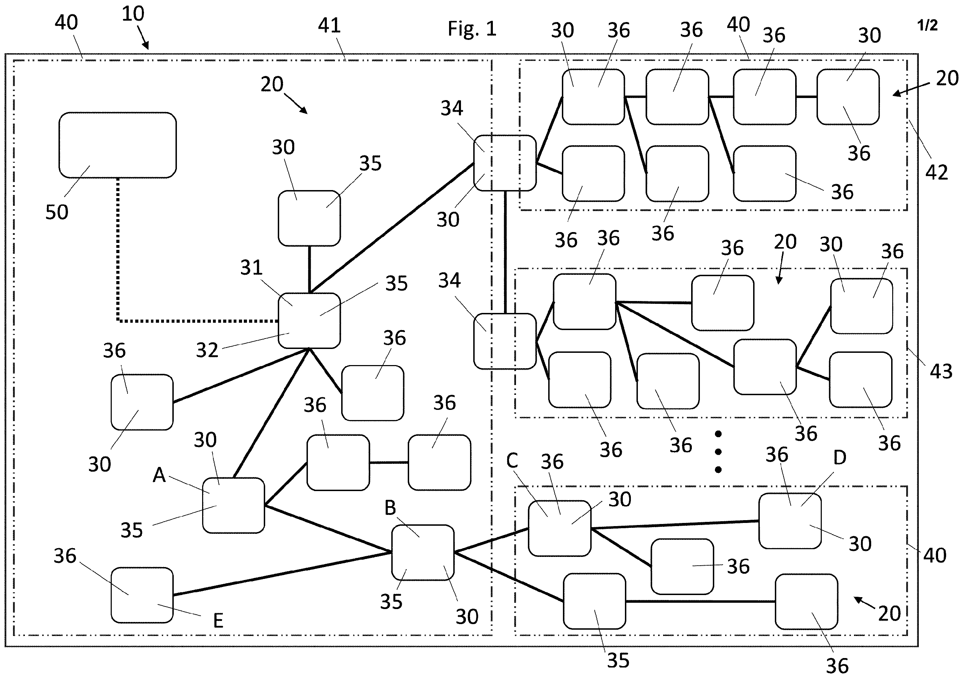

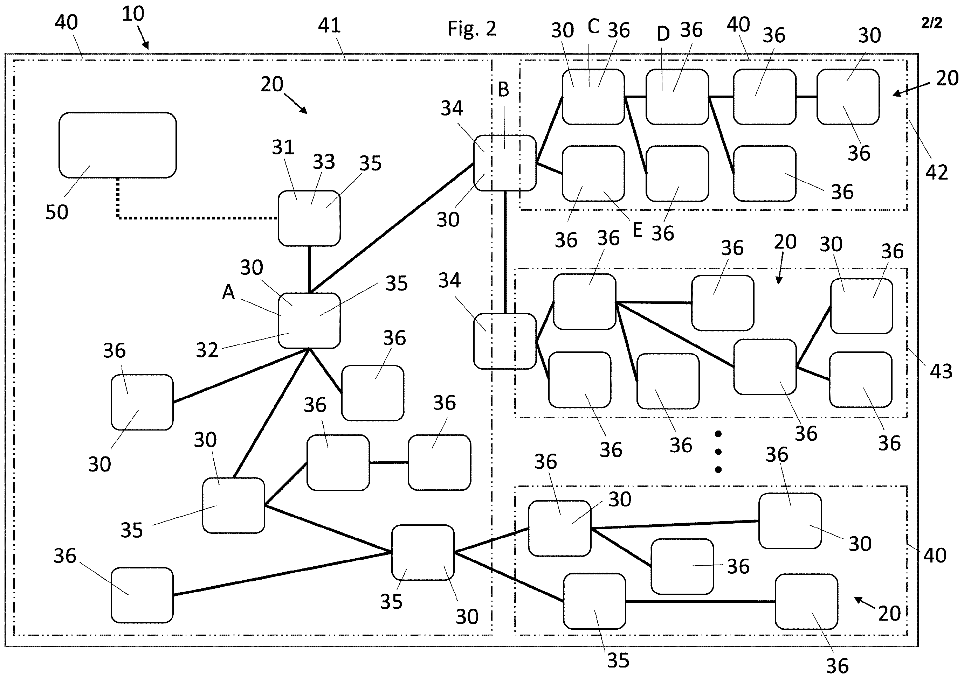

Fig. 1 und 2 zeigen beispielhaft erfindungsgemäße Türkommunikationssysteme 10 bzw. Abläufe eines erfindungsgemäßen Verfahrens zum Aufspielen und/oder Aktualisierung einer Firmware.

Das Türkommunikationssystem 10 kann ein dezentrales System sein oder aufweisen, und/oder einem dezentralen System entsprechen. Es kann vorgesehen sein, dass das Türkommunikationssystem 10 keine zentrale Komponente und/oder keinen zentralen Server haben kann. Das Türkommunikationssystem 10 kann auf IP Basis, und/oder SIP (session initiation protocol) Basis, beruhen und/oder einer solchen entsprechen. In einigen Ausführungsformen kann das Türkommunikationssystem 10 einem SIP-System entsprechen, wobei kein zentraler Server (z.B. für Registrierung und Verwaltung der Knoten) notwendig ist.

Das Türkommunikationssystem 10 kann Teil eines Smart Homes oder eines Gebäudeautomationssystems sein. Es kann vorgesehen sein, dass ein Smart Home, oder ein Gebäudeautomationssystem, das Türkommunikationssystem 10 umfassen kann. In einigen Ausführungsformen kann vorgesehen sein, dass das Türkommunikationssystem 10 mit mindestens einem anderen Gerät des Smart Homes oder des Gebäudeautomationssystems verbunden sein kann, und/oder Daten austauschen oder kommunizieren kann.

Das Türkommunikationssystem 10 umfasst eine Mehrzahl Netzwerkknoten 20. Die Mehrzahl Netzwerkknoten 20 kann eine Mehrzahl Knoten 30 umfassen. Ein Knoten 30 kann ein Netzwerkknoten sein oder aufweisen. Ein Knoten 30 kann ein Initialknoten 31, ein Innenstellenknoten 36, ein Außenstellenknoten 35 oder ein Netzwerkverbindungsknoten 34, ein Inbetriebnahmeknoten, ein erster Knoten 33 und/oder ein zweiter Knoten 33 sein oder aufweisen. Die Mehrzahl Netzwerkknoten 20 kann Knoten 30, den ersten Knoten 32 und/oder den zweiten Knoten 33 umfassen. Der erste Knoten 32 kann ein Außenstellenknoten 35, ein Innenstellenknoten 36 und/oder ein Netzwerkverbindungsknoten 34 sein oder aufweisen. Der zweite Knoten 33 kann ein Außenstellenknoten 35, ein Innenstellenknoten 36 und/oder ein Netzwerkverbindungsknoten 34 sein oder aufweisen. In einigen Ausführungsformen kann der erste Knoten 32 kann von dem zweiten Knoten 33 verschieden sein.

Ein Knoten 30 kann ein Kommunikationsteilnehmer sein oder aufweisen, und/oder als Kommunikationsteilnehmer bezeichnet sein oder werden. Ein Knoten 30 kann beispielsweise eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen sein oder aufweisen. Eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann beispielsweise einen Knoten 30 aufweisen. Ein Knoten 30, eine Klingel, eine Sprechanlage, ein Lautsprecher, ein Mobilgerät, ein Bildschirm, eine Kamera, ein Mikrophon, eine Innenstation, eine Außenstation, eine sonstige Komponente eines Türkommunikationssystems oder dergleichen kann in einer Wohneinheit, in einer Gewerbeeinheit, in einem Innenraum, in einem geschlossenen Raum, in einem Gebäude, an oder bei einer Innenseite einer Tür, in einem Außenbereich, im freien, draußen, vor einer Wohneinheit, vor einem Innenraum, vor einem Gebäude, an oder bei einer Außenseite einer Tür, oder dergleichen angeordnet sein.

Es kann vorgesehen sein, dass die Knoten 30 drahtlos miteinander kommunizieren und/oder Daten austauschen können, und/oder dazu eingerichtet sein können. Alternativ oder zusätzlich kann vorgesehen sein, dass die Knoten 30 kabelgebunden miteinander kommunizieren und/oder Daten austauschen können, und/oder dazu eingerichtet sein können, beispielsweise über ein BUS-System wie z.B. KNX. Die Kommunikation und/oder der Datenaustausch zwischen zwei Knoten 30 kann bidirektional sein und/oder erfolgen.

Das Türkommunikationssystem 10 kann eines oder mehrere Netzwerke 40 umfassen. Das Türkommunikationssystem 10 kann beispielsweise ein erstes Netzwerk 41 und ein zweites Netzwerk 42 aufweisen. In einigen Ausführungsformen kann das Türkommunikationssystem 10 mehr als zwei Netzwerke 40 aufweisen, beispielsweise eines oder mehrere weitere Netzwerke 43. Das erste Netzwerk 41, zweite Netzwerk 42 und/oder weitere Netzwerk 43 kann ein Netzwerk 40 des Türkommunikationssystems 10 sein. In einigen Ausführungsformen kann ein Netzwerk eines oder mehrere Subnetzwerke und/oder Teilnetzwerke umfassen.

Es kann vorgesehen sein, dass jedes Netzwerk 40 mindestens einen Knoten 30 aufweist. Ein Knoten 30 kann ein Netzwerkverbindungsknoten 34 sein oder aufweisen. Ein Knoten 30 kann ein Außenstellenknoten 35 sein oder aufweisen. Ein Knoten 30 kann ein Innenstellenknoten 36 sein oder aufweisen. Es kann vorgesehen sein, dass das Türkommunikationssystem 10 und/oder die Mehrzahl Netzwerkknoten 20 mindestens einen oder mehrere Netzwerkverbindungsknoten 34, Außenstellenknoten 35 und/oder Innenstellenknoten 36 aufweisen kann. Es kann vorgesehen sein, dass ein Netzwerk 40, z.B. das erste Netzwerk 41, das zweite Netzwerk 42 und/oder ein weiteres Netzwerk 43 mindestens einen Außenstellenknoten 35 und/oder mindestens einen Innenstellenknoten 36 aufweisen kann.

Weist ein Netzwerk 40, z.B. das erste Netzwerk 41, das zweite Netzwerk 42 und/oder ein weiteres Netzwerk 43, nur Außenstellenknoten 35 auf, und/oder sind alle Knoten 30 eines Netzwerks 40 Außenstellenknoten 35, so kann das entsprechende Netzwerk 40 ein Außenstellennetzwerk sein oder aufweisen, und/oder als Außenstellennetzwerk bezeichnet sein oder werden. Weist ein Netzwerk 40, z.B. das erste Netzwerk 41, das zweite Netzwerk 42 und/oder ein weiteres Netzwerk 43, nur Außenstellenknoten 35 und mindestens einen Netzwerkverbindungsknoten 34 auf, und/oder sind alle Knoten 30 eines Netzwerks 40 bis auf Netzwerkverbindungsknoten 34 Außenstellenknoten 35, so kann das entsprechende Netzwerk 40 ein Außenstellennetzwerk sein oder aufweisen, und/oder als Außenstellennetzwerk bezeichnet sein oder werden.

Weist ein Netzwerk 40, z.B. das erste Netzwerk 41, das zweite Netzwerk 42 und/oder ein weiteres Netzwerk 43, nur Innenstellenknoten 36 auf, und/oder sind alle Knoten 30 eines Netzwerks 40 Innenstellenknoten 36, so kann das entsprechende Netzwerk 40 ein Außenstellennetzwerk sein oder aufweisen, und/oder als Außenstellennetzwerk bezeichnet sein oder werden. Weist ein Netzwerk 40, z.B. das erste Netzwerk 41, das zweite Netzwerk 42 und/oder ein weiteres Netzwerk 43, nur Innenstellenknoten 36und mindestens einen Netzwerkverbindungsknoten 34 auf, und/oder sind alle Knoten 30 eines Netzwerks 40 bis auf Netzwerkverbindungsknoten 34 Innenstellenknoten 36, so kann das entsprechende Netzwerk 40 ein Außenstellennetzwerk sein oder aufweisen, und/oder als Außenstellennetzwerk bezeichnet sein oder werden.

Es kann aber auch vorgesehen sein, dass mindestens ein Netzwerk 40 mindestens einen Außenstellenknoten 35 und mindestens einen Innenstellenknoten 36 aufweisen kann.

Netzwerkverbindungsknoten 34 können verschiedene Netzwerke 40 miteinander verbinden. Beispielsweise kann ein Netzwerkverbindungsknoten 34 ein oder das erste Netzwerk 41 mit einem oder dem zweiten Netzwerk 42 verbinden. Beispielsweise kann ein Netzwerkverbindungsknoten 34 ein oder das erste Netzwerk 41 mit einem weiteren Netzwerk 43 verbinden. Beispielsweise kann ein Netzwerkverbindungsknoten 34 ein oder das zweite Netzwerk 42 mit einem weiteren Netzwerk 43 verbinden.

In einigen Ausführungsformen können die von einem Netzwerkverbindungsknoten 34 verbundenen Netzwerke 40 den Netzwerkverbindungsknoten 34 umfassen, bzw. der Netzwerkverbindungsknoten 34 zu den entsprechenden Netzwerken 40 gezählt sein oder werden. Alternativ können die von einem Netzwerkverbindungsknoten 34 verbundenen Netzwerke 40 den Netzwerkverbindungsknoten 34 nicht umfassen, bzw. der Netzwerkverbindungsknoten 34 nicht zu den entsprechenden Netzwerken 40 gezählt sein oder werden.

Beispielsweise kann das erste Netzwerk 41 mindestens einen Außenstellenknoten 35 und mindestens einen Innenstellenknoten 36 aufweisen, und das zweite Netzwerk 42 einen oder mehrere Innenstellenknoten 36 aufweisen. Beispielsweise kann das erste Netzwerk 41 mindestens ein Außenstellenknoten 35 aufweisen, und das zweite Netzwerk 42 ein oder mehrere Innenstellenknoten 36 aufweisen.

In einigen Ausführungsformen kann vorgesehen sein, dass das erste Netzwerk 41 keine Innenstellenknoten 36 aufweist. In einigen Ausführungsformen kann vorgesehen sein, dass das zweite Netzwerk 42 keinen Außenstellenknoten 35 aufweist.

Das Türkommunikationssystem 10 und/oder die Knoten 30 können entsprechend einer Projektierung konfiguriert sein oder werden. Die Projektierung kann umfassen, welche der Knoten 30 miteinander kommunizieren und/oder Daten austauschen können. Die Projektierung kann Verbindungen der Knoten 30 festlegen und/oder definieren. Die Projektierung kann Konfigurationsparameter, z.B. der Knoten 30, umfassen. In einigen Ausführungsformen kann die Projektierung ein "Verbindungsplan" der Knoten 30 und/oder des Türkommunikationssystems 10 sein oder aufweisen.

Beispielsweise kann die Projektierung definieren, dass ein Knoten 30 mit einem oder mehreren anderen Knoten 30 kommunizieren und/oder Daten austauschen kann, aber mit einem oder mehreren noch anderen Knoten 30 nicht kommunizieren und/oder Daten austauschen kann.

Beispielsweise kann die Projektierung umfassen, dass ein Knoten 30 mit einem oder mehreren anderen Knoten 30 unmittelbar verbunden sein oder werden kann, und/oder unmittelbar kommunizieren und/oder Daten austauschen kann, und mit mindestens einem anderen noch anderen Knoten 30 nicht unmittelbar verbunden sein oder werden kann, und/oder nicht mit mindestens einem noch anderen Knoten 30 unmittelbar kommunizieren und/oder Daten austauschen kann.

Die Projektierung kann computergestützt erstellt sein oder werden. In einigen Ausführungsformen kann die Projektierung mit einem Konfigurator erstellt sein oder werden. Der Konfigurator kann z.B. ein Software-Programm und/oder eine App sein oder aufweisen. In einigen Ausführungsformen kann die Projektierung mit und/oder von einem oder dem externen Gerät 50 erstellt sein oder werden.

Es kann vorgesehen sein, dass für und/oder bei der Erstellung der Projektierung, z.B. mit dem Konfigurator, keine physikalischen Knoten benötigt werden. Die physikalischen Knoten (z.B. Knoten 30, Initialknoten 31, Inbetriebnahmeknoten, erster Knoten 32, zweiter Knoten 33, Netzwerkverbindungsknoten 34, Außenstellenknoten 35 und/oder Innenstellenknoten 36) können erst bei der Inbetriebnahme des Systems erforderlich sein. Die Projektierung des Türkommunikationssystems 10 kann somit nur bei der Erstellung der Konfiguration eine Fachkraft mit höherer Qualifikation benötigen. Die Inbetriebnahme kann auch durch eine Fachkraft mit niedrigerer Qualifikation durchgeführt werden.

Es kann vorgesehen sein, dass die Knoten 30 nach dem Konfigurieren des Türkommunikationssystems 10 entsprechend der Projektierung und/oder der Konfigurationsparameter miteinander kommunizieren und/oder Daten austauschen können.

Es kann vorgesehen sein, dass ein Knoten 30 mit einem weiteren Knoten 30 verbunden sein kann, und der weitere Knoten 30 mit einem noch weiteren Knoten 30 verbunden sein kann. Der Knoten 30 kann mit dem noch weiteren Knoten 30 über den weiteren Knoten 30 kommunizieren und/oder Daten austauschen. Beispielsweise können Daten von dem Knoten 30 an den weiteren Knoten 30 übermittelt sein und/oder werden, und von dem weiteren Knoten 30 an den noch weiteren Knoten 30 weitergeleitet sein und/oder werden.

Es kann vorgesehen sein, dass die Projektierung und/oder die Kommunikationsparameter Informationen dahingehend umfassen, welche Knoten 30 welchem Netzwerk 40, 41, 42, 43 zuzuordnen ist, und/oder zugeordnet sein oder werden kann. Es kann vorgesehen sein, dass ein Knoten 30, z.B. ein Netzwerkverbindungsknoten 34, einem oder mehr, z.B. zwei oder mehr, Netzwerken 40, 41, 42, 43 zugeordnet sein oder werden kann.

Das erfindungsgemäße Verfahren zum Aufspielen und/oder Aktualisieren einer Firmware mindestens eines Knotens eines Türkommunikationssystems umfasst ein Auswählen eines Initialknotens 31. In einigen Ausführungsformen kann ein erster Knoten 32 der Mehrzahl der Netzwerkknoten 20 als Initialknoten 31 ausgewählt sein oder werden, und/oder der erste Knoten 32 der Initialknoten 31 sein.

Die Firmware wird an den Initialknoten 31 übermittelt. Dabei kann die Firmware von einem oder dem externen Gerät 50 übermittelt sein oder werden. In den Figuren 1 und 2 ist z.B. mit einer gepunkteten Linie die Übermittlung der Firmware von dem externen Gerät 50 an den Initialknoten 31, und/oder eine Verbindung des externen Geräts 50 mit dem Initialknoten 31, dargestellt. Das externe Gerät 50 kann beispielsweise ein Mobilgerät, z.B. ein Laptop, Smartphone, Tablet und/oder PDA sein. Alternativ oder zusätzlich kann das externe Gerät 50 ein Server sein oder aufweisen. Das mobile Gerät 50 kann ein Computergerät und/oder eine Computereinheit sein oder aufweisen. Es kann vorgesehen sein, dass ein oder das externe Gerät zur Durchführung eines erfindungsgemäßen Verfahrens verwendet werden kann.

Die Firmware wird von dem Initialknoten 31 an einen, mehrere oder alle mit dem Initialknoten 31 verbundene weitere Knoten 30 übermittelt. In den Figuren 1 und 2 ist z.B. mit einer durchgezogenen Linie die Übermittlung der Firmware von dem Initialknoten 31 an den oder die mit dem Initialknoten 31 verbundene weitere Knoten 30, und/oder eine Verbindung des Initialknotens 31 mit dem oder den weiteren Knoten 30, dargestellt.

Die Firmware wird an die übrigen Knoten 30 der Mehrzahl Netzwerkknoten 20 übermittelt. Dabei wird die Firmware von dem weiteren Knoten 30 oder den weiteren Knoten 30 an einen, mehrere oder alle mit dem oder den weiteren Knoten 30 verbundene noch weitere Knoten 30 übermittelt. Die weiteren Knoten 30 oder die weiteren Knoten 30 können damit als Replikator dienen.

Von den noch weiteren Knoten 30 kann die Firmware an die mit diesen verbundenen Knoten 30 übermittelt sein oder werden, insbesondere an solche, an die die Firmware noch nicht übermittelt ist.

Das Übermitteln der Firmware von einem oder mehreren Knoten 30 an damit verbundene Knoten 30 kann wiederholt werden, beispielsweise iterativ und/oder sukzessive. Die Firmware kann iterativ und/oder sukzessive in dem Türkommunikationssystem 10, dessen Netzwerk 40 und/oder Netzwerke 41, 42, 43 verteilt sein oder werden. Die Firmware kann entsprechend übermittelt sein oder werden, bis jeder Knoten 30 die Firmware empfangen hat. Die Firmware kann ausgehend von dem Initialknoten 31 verteilt sein oder werden.

Die Knoten 30 können damit als Replikator dienen. Insbesondere können diejenigen Knoten 30, die die Firmware bereits empfangen haben, als Replikator dienen. Damit können Knoten 30, die die Firmware bereits empfangen haben, die Firmware im Türkommunikationssystem 10, und/oder Netzwerk 40, erstem Netzwerk 41, zweitem Netzwerk 42 und/oder weiteren Netzwerk 43, verteilen. Bei einer oder mehreren Wiederholungen kann der oder die noch weitere Knoten 30 vor der Wiederholung dem oder den weiteren Knoten 30 bei der Wiederholung entsprechen. Beispielsweise kann die Firmware zunächst von dem Initialknoten 31 an einen Knoten A übertragen sein oder werden, und der Knoten A die Firmware an einen Knoten B übertragen. Dabei kann der Knoten A ein weiterer Knoten, und der Knoten B ein noch weiterer Knoten sein oder aufweisen. Bei einer Wiederholung kann die Firmware von dem Knoten B an einen Knoten C übertragen sein oder werden. Der Knoten B kann bei der Wiederholung ein weiterer Knoten sein, aufweisen und/oder entsprechen, und der Knoten C einem noch weiteren Knoten. In einigen Ausführungsformen kann eine weitere Wiederholung vorgesehen sein, wobei die Firmware von dem Knoten C an einen Knoten D übertragen sein oder werden kann. Der Knoten C kann bei der Wiederholung ein weiterer Knoten sein, aufweisen und/oder entsprechen, und der Knoten D einem noch weiteren Knoten. Weitere Wiederholungen können entsprechend vorgesehen sein. In einigen Ausführungsformen können so viele Wiederholungen vorgesehen sein, dass die Firmware an jeden Knoten übertragen sein oder werden kann. Es kann vorgesehen sein, dass bei mindestens einer Wiederholung nicht jeder der Knoten, die die Firmware vorher empfangen haben, die Firmware an einen noch weiteren Knoten übertragen müssen. Beispielsweise kann bei einer ersten Wiederholung die Firmware von dem Knoten B an einen Knoten C und einen Knoten E übertragen sein oder werden, und bei der weiteren Wiederholung die Firmware nicht von dem Knoten E übertragen sein oder werden kann.

Hat ein Knoten 30 die Firmware empfangen und/oder vorliegen, so kann die Firmware auf den Knoten aufgespielt sein oder werden, und/oder eine bereits vorliegende Firmware aktualisiert sein oder werden. Ein Übermitteln von Firmware kann Updates, z.B. Firmware-Updates, umfassen. Die Updates können dazu dienen, eine bereits vorliegende Firmware zu aktualisieren, z.B. die Firmware eines Knotens 30 zu aktualisieren und/oder upzudaten.

In einigen Ausführungsformen kann vorgesehen sein, dass ein Knoten 30 Teile der Firmware von verschiedenen mit dem Knoten 30 verbundenen Knoten 30 empfangen kann. Die jeweiligen Teile der Firmware können verschieden sein. Beispielsweise kann ein erster Teil der Firmware von einem Knoten 30, und ein zweiter Teil der Firmware von einem anderen Knoten 30 empfangen sein oder werden. Damit kann beispielsweise die Firmware parallel übertragen sein oder werden. Es kann vorgesehen sein, dass damit die Übertragungsgeschwindigkeit der Firmware im Netzwerk und/oder Türkommunikationssystem 10 erhöht sein kann. Alternativ oder zusätzlich kann vorgesehen sein, dass mindestens zwei Teile der Firmware, die von verschiedenen Knoten übertragen sein oder werden können, gleich sein können und/oder einander entsprechen können. Damit kann beispielsweise geprüft sein oder werden, ob die Firmware fehlerfrei übertragen ist oder wird.

Es kann vorgesehen sein, dass nach dem Aufspielen und/oder Aktualisieren der Firmware nochmals Firmware aufgespielt und/oder aktualisiert werden kann. Beispielsweise kann von dem externen Gerät 50 Firmware und/oder ein Update der Firmware an einen zweiten Knoten 33 übertragen sein oder werden, vergleiche z.B. Figur 2. Der zweite Knoten 33 kann von dem ersten Knoten 32 verschieden sein. In einigen Ausführungsformen kann aber auch vorgesehen sein, dass die Firmware und/oder ein entsprechendes Update an den ersten Knoten 32 übertragen sein oder werden kann. Der zweite Knoten 33 kann ein Initialknoten 31 für ein nochmaliges Aufspielen und/oder Aktualisieren der Firmware, und/oder verteilen der Firmware im Türkommunikationssystem 10, sein und/oder aufweisen, und/oder als Initialknoten 31 dienen.

In einigen Ausführungsformen kann vorgesehen sein, dass ein Außenstellenknoten 35 als Initialknoten 31, und/oder erster Knoten 32 und/oder zweiter Knoten 36, gewählt sein oder werden kann. Alternativ oder zusätzlich kann vorgesehen sein, dass ein Innenstellenknoten 36 als Initialknoten 31, und/oder erster Knoten 32 und/oder zweiter Knoten 36, gewählt sein oder werden kann. Es kann vorgesehen sein, dass ein beliebiger Knoten 30 als Initialknoten 31 ausgewählt sein oder werden kann.

In Figur 1 und 2 können durchgezogene schwarze Linien die Übertragung der Firmware darstellen. Die jeweiligen Knoten 30 können entsprechend der Projektierung miteinander kommunizieren und/oder Daten austauschen, wobei die entsprechenden Verbindungen zwischen den jeweiligen Knoten 30 nicht zwingend mit den durchgezogenen schwarze Linien in den Figuren 1 und 2 übereinstimmen müssen. Beispielsweise kann ein Knoten 30 mit mehr als einem Knoten 30 zum Datenaustausch und/oder Kommunikation verbunden sein.

Die in Figur 1 und 2 dargestellt, kann beispielsweise auch die Firmware zwischen zwei Netzwerkverbindungsknoten 34 übertragen sein oder werden. In einigen Ausführungsformen kann die Firmware zwischen zwei Knoten 30 auch über mehrere Verbindungen, beispielsweise über eine direkte Verbindung und eine mittelbare Verbindung über einen weiteren dazwischengeschalteten Knoten 30, übertragen sein oder werden. In einigen Ausführungsformen kann die Firmware von zwei oder mehr Knoten 30 an denselben Knoten 30 übertragen sein oder werden.

Die in den Figuren 1 und 2 gezeigten Verbindung zum Übertragen der Firmware sind rein beispielhaft. Die Firmware kann auch über andere, nicht zwingend in den Figuren 1 und 2 dargestellten Verbindungen zwischen jeweiligen Knoten 30 übertragen sein oder werden.

Beispielsweise kann das zweite Netzwerk 42 ein Innenstellennetzwerk sein. Beispielsweise kann das erste Netzwerk 41 mindestens einen Innenstellenknoten 35 und/oder mindestens einen Außenstellenknoten 36 umfassen.

Die Projektierung kann unabhängig und/oder vor dem Konfigurieren des Türkommunikationssystems 10, und/oder dem Aufspielen und/oder Aktualisieren der Firmware, erstellt sein oder werden.

Es kann vorgesehen sein, dass das Türkommunikationssystem 10 und/oder die Knoten 30 vor dem Aufspielen und/oder Aktualisieren der Firmware konfiguriert sein oder werden kann, z.B. entsprechend einer oder der Projektierung.

Das Türkommunikationssystem 10 kann entsprechend der Projektierung konfiguriert sein oder werden. Dabei kann zunächst ein Inbetriebnahmeknoten ausgewählt werden. Der Inbetriebnahmeknoten kann ein oder der erste Knoten 32 des Türkommunikationssystems 10 sein und/oder aufweisen. Es kann vorgesehen sein, dass der Inbetriebnahmeknoten beliebig ausgewählt sein oder werden kann, d.h. ein beliebiger Knoten 30 des Türkommunikationssystems 10 ausgewählt sein oder werden kann. Alternativ oder zusätzlich kann vorgesehen sein, dass der zweite Knoten 33 als Inbetriebnahmeknoten ausgewählt sein oder werden kann.

In einigen Ausführungsformen kann vorgesehen sein, dass ein Außenstellenknoten 35 des Türkommunikationssystems 10 als Inbetriebnahmeknoten 31 ausgewählt sein oder werden kann.

Die Projektierung kann an den Inbetriebnahmeknoten übermittelt werden. Es kann vorgesehen sein, dass die Projektierung von einem oder dem externen Gerät 50 an den Inbetriebnahmeknoten 31 übermittelt sein oder werden kann. Beim Auswählen des Inbetriebnahmeknotens 31 kann z.B. ein Knoten 30 des ersten Netzwerks 41 als Inbetriebnahmeknoten 31 ausgewählt werden, z.B. ein Außenstellenknoten 35. In einigen Ausführungsformen kann alternativ oder zusätzlich ein Innenstellenknoten 36 als Inbetriebnahmeknoten 31 ausgewählt sein oder werden.

Die Projektierung und/oder Konfigurationsparameter der Projektierung können ausgehend von dem Inbetriebnahmeknoten an die übrigen Knoten 30 der Mehrzahl Netzwerkknoten 20 übermittelt werden.

Die Projektierung und/oder Konfigurationsparameter können von dem Inbetriebnahmeknoten an die mit dem Inbetriebnahmeknoten verbundenen, beispielsweise unmittelbar verbundenen, Knoten 30 übermittelt sein oder werden. Anschließend können die mit dem Inbetriebnahmeknoten verbundenen Knoten 30, die von dem Inbetriebnahmeknoten die Projektierung und/oder Konfigurationsparameter empfangen haben, die Projektierung und/oder Konfigurationsparameter an weitere verbundene Knoten übermitteln.

Es kann vorgesehen sein, dass ein Knoten 30 die Projektierung und/oder Konfigurationsparameter an mindestens einen weiteren mit dem Knoten 30 verbundenen anderen Knoten 30 übertragen kann.

Beispielsweise kann der Inbetriebnahmeknoten ein Knoten 30 und/oder ein erster Knoten 32 eines ersten Netzwerks 41 sein. Es kann vorgesehen sein, dass der Inbetriebnahmeknoten die Projektierung und/oder Konfigurationsparameter an einen Netzwerkverbindungsknoten 34 zwischen dem ersten Netzwerk 41 und dem zweiten Netzwerk 42 übertragen kann.

Es kann vorgesehen sein, dass der Inbetriebnahmeknoten die Projektierung und/oder und Konfigurationsparameter an alle Knoten 30, die sich in demselben Netzwerk 40 wie der Inbetriebnahmeknoten befinden können und/oder gemäß der Projektierung in demselben Netzwerk 40 vorgesehen sein können, übertragen kann. Alternativ oder zusätzlich kann der Inbetriebnahmeknoten die Projektierung und/oder Konfigurationsparameter an mindestens einen Knoten 30 übertragen, und der Knoten 30 die Projektierung und/oder Konfigurationsparameter an ein weiteren Knoten 30 übertragen.

Es kann vorgesehen sein, dass einer, mehrere oder alle Knoten 30, 35 eines Innenstellennetzwerks von einem mit dem Innenstellennetzwerk verbundenen Netzwerkverbindungsknoten 34 konfiguriert sein oder werden können.

Die Projektierung und/oder Konfigurationsparameter können sukzessive in dem Türkommunikationssystem 10 verteilt sein oder werden. Die Verteilung der Projektierung und/oder Konfigurationsparameter kann ausgehend von dem Inbetriebnahmeknoten erfolgen. Damit kann die Projektierung und/oder die Konfigurationsparameter schnell in dem Türkommunikationssystem 10 verteilt sein oder werden.

Alternativ oder zusätzlich kann vorgesehen sein, dass der Inbetriebnahmeknoten die Projektierung und/oder die Konfigurationsparameter unmittelbar an mindestens einen, mehrere oder jeden der übrigen Knoten 30 der Mehrzahl Netzwerkknoten 20 übertragen kann.

Mindestens ein in der Projektierung vorgesehener Knoten 30 kann nach dem Aufspielen und/oder Aktualisieren der Firmware dem Türkommunikationssystem 10 hinzugefügt werden. Die Projektierung und/oder die Konfigurationsparameter können an den neu hinzugefügten Knoten 30 übertragen werden, beispielsweise von dem Initialknoten 31 und/oder einem mit dem hinzugefügten Knoten 30 unmittelbar verbundenen Knoten 30. Damit können projektierte Knoten 30 auch zu einem späteren Zeitpunkt verbaut werden. Diese können z.B. automatisch gefunden werden, und anschließend die Firmware erhalten und/oder entsprechend konfiguriert sein oder werden.

Alternativ oder zusätzlich kann mindestens ein in der Projektierung vorgesehener Knoten 30 nach dem Konfigurieren dem Türkommunikationssystem 10 hinzugefügt werden. Die Projektierung und/oder die Konfigurationsparameter können an den neu hinzugefügten Knoten 30 übertragen werden, beispielsweise von dem Inbetriebnahmeknoten und/oder einem mit dem hinzugefügten Knoten 30 unmittelbar verbundenen Knoten 30. Der hinzugefügte Knoten 30 kann entsprechend der Projektierung konfiguriert werden. Damit können projektierte Knoten 30 auch zu einem späteren Zeitpunkt verbaut werden. Diese können z.B. automatisch gefunden werden, und anschließend die im Projekt für sie erstellte Konfiguration erhalten und/oder entsprechend konfiguriert sein oder werden.

Ein erfindungsgemäßes Türkommunikationssystem 10 kann eine Mehrzahl Netzwerkknoten 20 umfassen, deren Firmware nach einem erfindungsgemäßen Verfahren aktualisiert ist und/oder auf die Firmware nach einem der erfindungsgemäßen Verfahren aufgespielt sein kann.

In einigen Ausführungsformen kann vorgesehen sein, dass mindestens zwei oder mehr Knoten 30 als Initialknoten 31 ausgewählt sein oder werden können. Das Türkommunikationssystem 10 kann mindestens zwei Initialknoten 31 haben, und/oder mindestens zwei der Knoten 30 der Mehrzahl Netzwerkknoten 20 ein entsprechender Initialknoten 31 sein oder aufweisen. Die Firmware kann an jeden der Initialknoten 31 übertragen sein und/oder werden, z.B. von einem oder dem externen Gerät 50, und anschließend ausgehend von mindestens einem, mehreren oder jedem der Initialknoten 31 im Türkommunikationssystem 10 und/oder Netzwerk 40, ersten Netzwerk 41, zweiten Netzwerk 42 und/oder weiteren Netzwerken 43, an die übrigen Knoten verteilt und/oder übertragen sein oder werden. Dabei können Knoten, 30 die die Firmware bereits empfangen haben, als Replikator dienen.

Die Knoten 30 des Türkommunikationssystems 10 können dazu eingerichtet sein, miteinander zu kommunizieren und/oder Daten auszutauschen. Die Projektierung kann dabei umfassen, welche Knoten 30 der Mehrzahl Netzwerkknoten mit welchen anderen Knoten 30 kommunizieren und/oder Daten austauschen können. Die Kommunikation und/oder der Datenaustausch kann verschlüsselt sein, und/oder die Knoten 30 können dazu eingerichtet sein, verschlüsselt miteinander zu kommunizieren und/oder verschlüsselt Daten auszutauschen.

Das Türkommunikationssystem 10 kann ein erstes Netzwerk 41 und ein zweites Netzwerk 42 aufweisen. Das erste Netzwerk 41 kann über einen oder mehrere Netzwerkverbindungsknoten 34 mit dem zweiten Netzwerk 42 verbunden sein.

Das erste Netzwerk 41 kann mindestens einen Außenstellenknoten 35 aufweisen. Das zweite Netzwerk 42 kann mindestens einen Innenstellenknoten 36 aufweisen. Alternativ oder zusätzlich kann das erste Netzwerk 41 ein Außenstellennetzwerk sein oder aufweisen, und/oder das zweite Netzwerk 42 ein Innstellennetzwerk sein oder aufweisen. Es kann auch vorgesehen sein, dass das erste Netzwerk ein Innstellennetzwerk und/oder das zweite Netzwerk ein Außenstellennetzwerk sein und/oder aufweisen kann.

Die in den Ansprüchen, der Beschreibung und/oder den Figuren offenbarten Merkmale können einzeln oder in beliebiger Kombination für die Verwirklichung der Erfindung wesentlich sein.

### Bezugszeichenliste

- 10: Türkommunikationssystem
- 20: Mehrzahl Netzwerkknoten
- 30: Knoten
- 31: Initialknoten
- 32: erster Knoten
- 33: zweiter Knoten
- 34: Netzwerkverbindungsknoten
- 35: Außenstellenknoten
- 36: Innenstellenknoten
- 40: Netzwerk
- 41: erstes Netzwerk
- 42: zweites Netzwerk
- 43: weiteres Netzwerk
- 50: externes Gerät

- A: Knoten
- B: Knoten
- C: Knoten
- D: Knoten
- E: Knoten

## Patentansprüche

1. Verfahren zum Aufspielen und/oder Aktualisieren einer Firmware mindestens eines Knotens (30) eines Smart Home- oder Gebäude-Automations-Systems, beispielsweise eines Türkommunikationssystems (10), wobei das Smart Home- oder Gebäude-Automations-System eine Mehrzahl Netzwerkknoten (20) umfasst, die gemäß einer Projektierung konfiguriert sind, wobei das Verfahren umfasst:
a) Auswählen eines Initialknotens (31), wobei ein erster Knoten (32) der Mehrzahl der Netzwerkknoten (20) als Initialknoten (31) ausgewählt wird;
b) Übermitteln der Firmware an den Initialknoten (31), wobei bevorzugt die Firmware von einem externen Gerät (50) übermittelt wird;
c) Übermitteln der Firmware von dem Initialknoten (31) an einen, mehrere oder alle mit dem Initialknoten (31) verbundene weitere Knoten (30);
d) Übermitteln der Firmware an die übrigen Knoten (30) der Mehrzahl Netzwerkknoten (20), wobei die Firmware von dem weiteren Knoten (30) oder den weiteren Knoten (30) an einen, mehrere oder alle mit dem oder den weiteren Knoten verbundene noch weitere Knoten (30) übermittelt wird, so dass der weitere Knoten (30) oder die weiteren Knoten (30) als Replikator dienen.

2. Verfahren nach Anspruch 1, wobei der Schritt d) wiederholt wird, so dass die Firmware an alle Knoten (30) der Mehrzahl Netzwerkknoten (20) sukzessive übermittelt wird.

3. Verfahren nach einem der vorangegangenen Ansprüche, bei dem beim Übermitteln der Firmware mindestens zwei oder mehr weitere Knoten (30) die Firmware an mindestens einen der noch weiteren Knoten (30) übermitteln, so dass die Firmware an den noch weiteren Knoten (30) parallel übermittelt wird.

4. Verfahren nach Anspruch 3, bei dem ein erster Teile der Firmware von einem der weiteren Knoten (30), und ein zweiter Teil der Firmware von einem anderen der weiteren Knoten (30) an den noch weiteren Knoten (30) übermittelt wird, wobei bevorzugt der erste Teil der Firmware und der zweite Teil der Firmware voneinander verschieden sind.

5. Verfahren nach einem der vorangegangenen Ansprüche, bei dem das Smart Home- oder Gebäude-Automations-System ein erstes Netzwerk (41) und ein zweites Netzwerk (42) umfasst, die über mindestens einen Netzwerkverbindungsknoten (34) miteinander verbunden sind, wobei beim Übermitteln der Firmware an die übrigen Knoten (30) die Firmware von dem ersten Netzwerk (41) an das zweite Netzwerk (42) über den Nerzwerkverbindungsknoten (34) übermittelt wird, und/oder von dem zweiten Netzwerk (42) an das erste Netzwerk (41) über den Nerzwerkverbindungsknoten (34) übermittelt wird.

6. Verfahren nach Anspruch 5, bei dem das erste Netzwerk (41) ein Außenstellennetzwerk und das zweite Netzwerk (42) ein Innenstellennetzwerk ist und/oder aufweist, oder bei dem das erste Netzwerk (41) ein Innenstellennetzwerk und das zweite Netzwerk (42) ein Außenstellennetzwerk ist und/oder aufweist, wobei bei dem Auswählen des Initialknotens (31) ein Knoten (30) des ersten Netzwerks (41) als Initialknoten (31) ausgewählt wird.

7. Verfahren nach einem der vorangegangenen Ansprüche, bei dem mindestens ein Knoten (30) der Mehrzahl Netzwerkknoten (20) ein Außenstellenknoten (35) ist, und wobei bei dem Auswählen des Initialknotens (31) ein oder der Außenstellenknoten (35) als Initialknoten (31) ausgewählt wird.

8. Verfahren nach einem der vorangegangenen Ansprüche, bei dem das Verfahren wiederholt wird, wobei beim Auswählen des Initialknotens (31) ein zweiter Knoten (33) als Initialknoten (31) ausgewählt wird, wobei bevorzugt der zweite Knoten (33) und der erste Knoten (32) verschieden sind.

9. Verfahren nach einem der vorangegangenen Ansprüche, wobei vor dem Auswählen des Initialknotens (31) das Smart Home- oder Gebäude-Automations-System entsprechend der Projektierung konfiguriert wird, wobei das Konfigurieren umfasst:
- Bereitstellen der Projektierung des Smart Home- oder Gebäude-Automations-Systems ;
- Auswählen eines Inbetriebnahmeknotens, wobei ein Knoten (30) der Mehrzahl Netzwerkknoten (20) als Inbetriebnahmeknoten ausgewählt wird;
- Übermitteln der Projektierung an den Inbetriebnahmeknoten, wobei bevorzugt die Projektierung von einem oder dem externen Gerät (50) übermittelt wird;
- Übermitteln der Projektierung und/oder Konfigurationsparameter der Projektierung ausgehend von dem Inbetriebnahmeknoten an die übrigen Knoten (30) der Mehrzahl Netzwerkknoten (20), und Konfigurieren der Knoten (30) mit einer der Projektierung entsprechenden Konfiguration.

10. Verfahren nach Anspruch 9, bei dem beim Übertragen der Projektierung und/oder der Konfigurationsparameter
- die Projektierung und/oder Konfiguration zwischen mindestens zwei, mehreren oder allen jeweils unmittelbar miteinander verbundenen Knoten (30) übertragen wird, und/oder sukzessive mindestens zwei, mehrere oder jeder der Knoten (30) konfiguriert wird, und/oder
- wobei der Inbetriebnahmeknoten die Projektierung und/oder die Konfigurationsparameter unmittelbar an mindestens einen, mehrere oder jeden der übrigen Knoten (30) überträgt.

11. Verfahren nach einem der vorangegangenen Ansprüche, bei dem mindestens ein in der Projektierung vorgesehener Knoten (30) nach dem Aufspielen und/oder nach der Aktualisierung der Firmware dem Smart Home- oder Gebäude-Automations-System hinzugefügt wird, und die Firmware an den neu hinzugefügten Knoten (30) übertragen wird, bevorzugt von dem Initialknoten (31) und/oder einem mit dem hinzugefügten Knoten (30) unmittelbar verbundenen Knoten.

12. Smart Home- oder Gebäude-Automations-System, beispielsweise ein Türkommunikationssystem (10), umfassend eine Mehrzahl Netzwerkknoten (20), deren Firmware nach einem der vorangegangenen Ansprüche aktualisiert ist und/oder auf die Firmware nach einem der vorangegangenen Ansprüche aufgespielt ist.

13. Smart Home- oder Gebäude-Automations-System nach Anspruch 12, bei dem die Knoten (30) der Mehrzahl Netzwerkknoten (20) dazu eingerichtet sind, miteinander zu kommunizieren und/oder Daten auszutauschen, bevorzugt verschlüsselt miteinander zu kommunizieren und/oder verschlüsselt Daten auszutauschen.

14. Smart Home- oder Gebäude-Automations-System nach einem der vorangegangenen Ansprüche 12 oder 13, das ein erstes Netzwerk (41), ein zweites Netzwerk (42) und mindestens einen Netzwerkverbindungsknoten (34) aufweist, wobei das erste Netzwerk (41) mit dem zweiten Netzwerk (42) über den mindestens einen Netzwerkverbindungsknoten (34) verbunden ist.

15. Smart Home- oder Gebäude-Automations-Systemnach Anspruch 14, bei dem
- das erste Netzwerk (41) mindestens einen Außenstellenknoten (35) aufweist, und/oder das zweite Netzwerk (42) mindestens einen Innenstellenknoten (36) aufweist, und/oder
- bei dem das erste Netzwerk (41) ein Außenstellennetzwerk und/oder das zweite Netzwerk (42) ein Innenstellennetzwerk ist und/oder aufweist, oder wobei das erste Netzwerk (41) ein Innstellennetzwerk und/oder das zweite Netzwerk ein Außenstellennetzwerk (42) ist und/oder aufweist.

## Geänderte Patentansprüche

### Geänderte Patentansprüche gemäss Regel 137(2) EPÜ.

1. Verfahren zum Aufspielen und/oder Aktualisieren einer Firmware mindestens eines Knotens (30) eines Smart Home- oder Gebäude-Automations-Systems, beispielsweise eines Türkommunikationssystems (10), wobei das Smart Home- oder Gebäude-Automations-System eine Mehrzahl Netzwerkknoten (20) umfasst, die gemäß einer Projektierung konfiguriert sind, wobei das Verfahren umfasst:
a) Auswählen eines Initialknotens (31), wobei ein erster Knoten (32) der Mehrzahl der Netzwerkknoten (20) als Initialknoten (31) ausgewählt wird;
b) Übermitteln der Firmware an den Initialknoten (31), wobei bevorzugt die Firmware von einem externen Gerät (50) übermittelt wird;
c) Übermitteln der Firmware von dem Initialknoten (31) an einen, mehrere oder alle mit dem Initialknoten (31) verbundene weitere Knoten (30);
d) Übermitteln der Firmware an die übrigen Knoten (30) der Mehrzahl Netzwerkknoten (20), wobei die Firmware von dem weiteren Knoten (30) oder den weiteren Knoten (30) an einen, mehrere oder alle mit dem oder den weiteren Knoten verbundene noch weitere Knoten (30) übermittelt wird, so dass der weitere Knoten (30) oder die weiteren Knoten (30) als Replikator dienen,
wobei beim Übermitteln der Firmware mindestens zwei oder mehr weitere Knoten (30) die Firmware an mindestens einen der noch weiteren Knoten (30) übermitteln, so dass die Firmware an den noch weiteren Knoten (30) parallel übermittelt wird.

2. Verfahren nach Anspruch 1, wobei der Schritt d) wiederholt wird, so dass die Firmware an alle Knoten (30) der Mehrzahl Netzwerkknoten (20) sukzessive übermittelt wird.

3. Verfahren nach einem der vorangegangenen Ansprüche 1 oder 2, bei dem ein erster Teile der Firmware von einem der weiteren Knoten (30), und ein zweiter Teil der Firmware von einem anderen der weiteren Knoten (30) an den noch weiteren Knoten (30) übermittelt wird, wobei bevorzugt der erste Teil der Firmware und der zweite Teil der Firmware voneinander verschieden sind.

4. Verfahren nach einem der vorangegangenen Ansprüche, bei dem das Smart Home- oder Gebäude-Automations-System ein erstes Netzwerk (41) und ein zweites Netzwerk (42) umfasst, die über mindestens einen Netzwerkverbindungsknoten (34) miteinander verbunden sind, wobei beim Übermitteln der Firmware an die übrigen Knoten (30) die Firmware von dem ersten Netzwerk (41) an das zweite Netzwerk (42) über den Nerzwerkverbindungsknoten (34) übermittelt wird, und/oder von dem zweiten Netzwerk (42) an das erste Netzwerk (41) über den Nerzwerkverbindungsknoten (34) übermittelt wird.

5. Verfahren nach Anspruch 4, bei dem das erste Netzwerk (41) ein Außenstellennetzwerk und das zweite Netzwerk (42) ein Innenstellennetzwerk ist und/oder aufweist, oder bei dem das erste Netzwerk (41) ein Innenstellennetzwerk und das zweite Netzwerk (42) ein Außenstellennetzwerk ist und/oder aufweist, wobei bei dem Auswählen des Initialknotens (31) ein Knoten (30) des ersten Netzwerks (41) als Initialknoten (31) ausgewählt wird.

6. Verfahren nach einem der vorangegangenen Ansprüche, bei dem mindestens ein Knoten (30) der Mehrzahl Netzwerkknoten (20) ein Außenstellenknoten (35) ist, und wobei bei dem Auswählen des Initialknotens (31) ein oder der Außenstellenknoten (35) als Initialknoten (31) ausgewählt wird.

7. Verfahren nach einem der vorangegangenen Ansprüche, bei dem das Verfahren wiederholt wird, wobei beim Auswählen des Initialknotens (31) ein zweiter Knoten (33) als Initialknoten (31) ausgewählt wird, wobei bevorzugt der zweite Knoten (33) und der erste Knoten (32) verschieden sind.

8. Verfahren nach einem der vorangegangenen Ansprüche, wobei vor dem Auswählen des Initialknotens (31) das Smart Home- oder Gebäude-Automations-System entsprechend der Projektierung konfiguriert wird, wobei das Konfigurieren umfasst:
- Bereitstellen der Projektierung des Smart Home- oder Gebäude-Automations-Systems ;
- Auswählen eines Inbetriebnahmeknotens, wobei ein Knoten (30) der Mehrzahl Netzwerkknoten (20) als Inbetriebnahmeknoten ausgewählt wird;
- Übermitteln der Projektierung an den Inbetriebnahmeknoten, wobei bevorzugt die Projektierung von einem oder dem externen Gerät (50) übermittelt wird;
- Übermitteln der Projektierung und/oder Konfigurationsparameter der Projektierung ausgehend von dem Inbetriebnahmeknoten an die übrigen Knoten (30) der Mehrzahl Netzwerkknoten (20), und Konfigurieren der Knoten (30) mit einer der Projektierung entsprechenden Konfiguration.

9. Verfahren nach Anspruch 8, bei dem beim Übertragen der Projektierung und/oder der Konfigurationsparameter
- die Projektierung und/oder Konfiguration zwischen mindestens zwei, mehreren oder allen jeweils unmittelbar miteinander verbundenen Knoten (30) übertragen wird, und/oder sukzessive mindestens zwei, mehrere oder jeder der Knoten (30) konfiguriert wird, und/oder
- wobei der Inbetriebnahmeknoten die Projektierung und/oder die Konfigurationsparameter unmittelbar an mindestens einen, mehrere oder jeden der übrigen Knoten (30) überträgt.

10. Verfahren nach einem der vorangegangenen Ansprüche, bei dem mindestens ein in der Projektierung vorgesehener Knoten (30) nach dem Aufspielen und/oder nach der Aktualisierung der Firmware dem Smart Home- oder Gebäude-Automations-System hinzugefügt wird, und die Firmware an den neu hinzugefügten Knoten (30) übertragen wird, bevorzugt von dem Initialknoten (31) und/oder einem mit dem hinzugefügten Knoten (30) unmittelbar verbundenen Knoten.

11. Smart Home- oder Gebäude-Automations-System, beispielsweise ein Türkommunikationssystem (10), umfassend eine Mehrzahl Netzwerkknoten (20), deren Firmware nach einem der vorangegangenen Ansprüche aktualisiert ist und/oder auf die Firmware nach einem der vorangegangenen Ansprüche aufgespielt ist.

12. Smart Home- oder Gebäude-Automations-System nach Anspruch 11, bei dem die Knoten (30) der Mehrzahl Netzwerkknoten (20) dazu eingerichtet sind, miteinander zu kommunizieren und/oder Daten auszutauschen, bevorzugt verschlüsselt miteinander zu kommunizieren und/oder verschlüsselt Daten auszutauschen.

13. Smart Home- oder Gebäude-Automations-System nach einem der vorangegangenen Ansprüche 11 oder 12, das ein erstes Netzwerk (41), ein zweites Netzwerk (42) und mindestens einen Netzwerkverbindungsknoten (34) aufweist, wobei das erste Netzwerk (41) mit dem zweiten Netzwerk (42) über den mindestens einen Netzwerkverbindungsknoten (34) verbunden ist.

14. Smart Home- oder Gebäude-Automations-Systemnach Anspruch 13, bei dem
- das erste Netzwerk (41) mindestens einen Außenstellenknoten (35) aufweist, und/oder das zweite Netzwerk (42) mindestens einen Innenstellenknoten (36) aufweist, und/oder
- bei dem das erste Netzwerk (41) ein Außenstellennetzwerk und/oder das zweite Netzwerk (42) ein Innenstellennetzwerk ist und/oder aufweist, oder wobei das erste Netzwerk (41) ein Innstellennetzwerk und/oder das zweite Netzwerk ein Außenstellennetzwerk (42) ist und/oder aufweist.
